# EUROPEAN PATENT SPECIFICATION

(11) **EP 2 228 243 B1**
(45) Date of publication and mention of the grant of the patent: **07.09.2011**
(21) Application number: 10155523.3
(22) Date of filing: 04.03.2010
(51) Int. Cl.: B60H 1/00

(54) **Ventilation, heating and/or air conditioning device for the interior of an automotive vehicle**
Belüftungs-, Heizungs- und Klimaanlagenvorrichtung für den Innenraum eines Automobils
Appareil de ventilation, chauffage et/ou de conditionnement d'air pour l'habitacle d'un véhicule automobile

(30) Priority: 06.03.2009 BR 09005145
(43) Date of publication of application: 15.09.2010
(73) Proprietor: Valeo sistemas automotivos LTDA, 13250-000 Itatiba (BR)
(72) Inventor: Matias, Tiago, 12913-022, BRAGANCA PAULISTA (BR); Gerez, José Antonio, 13230-411, PAULISTA (BR); Albessu, Luiz, 13251-100, ITATIBA (BR)
(74) Representative: Léveillé, Christophe

(56) References cited:
- EP-A1- 1 902 876
- BR-A- PI0 705 302
- GB-A- 2 329 465

## Description

This invention pertains to an air distributer for an air conditioning system for the interior of automotive vehicles and includes an auxiliary duct with two air intakes, integrated and located on the said air distribution box in an air conditioning system for the interior of automotive vehicles. This duct is designed to feed a distribution outlet of the air device of an air conditioning system for the interior of automotive vehicles with a permanent air output. This permanent output is obtained through the two intakes existing in the auxiliary duct. The air can be collected only through the auxiliary duct, that is, the permanent outlet, or through the total area of collection. This permanent air mass is directed through the auxiliary duct towards the lateral regions of the ventilation outlet with no output occurring at the central ventilation outlet.

This invention may be applied to air distributers for the ventilation (V), ventilation/heating (HV), ventilation/heating/air conditioning (HVAC) and ventilation/air conditioning (VAC) versions used in cars, trucks and automotive vehicles in general, varying only in the air intake point, depending on the geometry of the distribution box and on the area of the duct, according to the output desired for the ventilation outlets and the number of air intakes (which may be one, two or more) as per the requirements and the geometry of the box.

The following patents describe similar solutions: DE3608524, DE3529389 and FR2789017. The solutions proposed in these prior patents capture air on a given point of the box and guide it towards the ventilation outlets. However, in such solutions it is not possible for the central ventilation outlet to remain airtight in the feet, feet + windshield and windshield distribution mode. GB 2 329 465 A describes a device according to the preamble of claim 1

There is also a patent request ref. PI0705302, filed by BR, that guarantees the air sealing for the feet, feet + windshield and windshield modes. However, the technical solution for the construction of the polymer injection tool cannot be used in certain cases.

There are other solutions that allow output in the lateral ventilation outlets and air sealing in the central outlet. However, that requires the inclusion of additional components, such as flaps and levers in the kinematic distribution.

This invention affords a defined perfecting in relation to the previous technique represented by the above mentioned patents and by the other solutions mentioned.

The goal of the invention is to obtain an air residue in all the distribution modes at the left and right lateral ventilation outlets but with no output in the central ventilation outlet, using the smaller number of components possible with a view to the reduction of the cost of the component and of the assembly time.

The goal of the invention is reached through a distribution box with an auxiliary duct with two intakes integrated in the said box. The first air intake of this duct collects the air before the ventilation flap "ventilation duct" and guides it directly to the lateral ventilation outlets. The air that flows inside this duct does not have to pass through the ventilation flap that, when set to "closed", blocks the air flow to the central ventilation outlet. Therefore, it is possible to obtain a continuous air flow in the side outlets through this "ventilation duct" even when the ventilation flap is set to the "closed" position. The second air intake is used in the cases in which there is no air flow before the ventilation flap, "ventilation duct", such as: windshield distribution mode. Therefore, this second air intake collects air directly from the "windshield duct" and leads it to the lateral ventilation outlet, so it is possible to obtain a continuous air flow in the lateral ventilation outlets even if there is no circulation of air before the ventilation flap, "ventilation duct".

Both intakes - "ventilation duct" and "windshield duct" - direct the air to the lateral ventilation outlets. Therefore, this auxiliary duct has two intakes - "ventilation duct" and "windshield duct" - and one single outlet that leads the permanent air flow to the ventilation laterals.

This concept of distribution of air added to this auxiliary air duct - "ventilation duct" and "windshield duct" - allows a permanent air flow in the lateral ventilation outlets with the use of only two flaps for the distribution of air considering five distribution modes: Ventilation, Ventilation + Feet, Feet, Feet + Windshield and Windshield only.

The lateral ventilation outlets are divided in two sections that may be adjusted according to the outputs required. One of the sections is fed by the auxiliary duct that allows a permanent output in all distribution modes. The other section is fed by the air that comes from the "ventilation duct" when air is required in the ventilation position. Air output is only possible in the ventilation and ventilation + feet distribution modes for this section as a result of the positioning of the flaps, that is, when the ventilation flap is set to "open".

The air sealing of the central ventilation outlet in the windshield, windshield + feet and feet distribution modes is guaranteed through EPDM sealing that is overmoulded on the contact area of the distribution flaps. This sealing may also be performed by using foam or another type of adherent, fixated or overmoulded material on the flaps that is meant to absorb variations and imperfections of the polymeric material of the distribution box when in contact with the said flap when set to the "closed" position.

Between the auxiliary duct - that maintains a continuous output in the lateral outlets - and the central outlet there are moulded walls in the box that guarantee that the central outlet is isolated from the lateral outlets, thus working in a dedicated and exclusive manner. This allows for the air sealing of the central outlet in the windshield, windshield + feet and feet modes.

When the windshield flap is set to the "closed" position there should be no output in the windshield and no air output to the windshield should occur through the auxiliary duct coming from the ventilation. For that purpose, the geometry of the collection of air was adjusted by using CFD so that no inverse flow occurs, that is, from the ventilation to the windshield outlet. The same occurs when the windshield flap is in "all open" position, in which case there should be no output to the feet. The geometry of the collection was also defined through CFD simulations that guarantee that this problem is minimised.

This entire system is composed of two flaps activated by two levers connected to an adequate cam or set of kinematics according to the requirements of each design. This entire set may be activated by mechanical or electronic means through conventional command cables, pull-pull cable, electrical or pneumatic actuators.

Therefore, the performance goal was reached with a reduced number of components and a simple assembly. The effectiveness of the system was proven through a CFD simulation.

In summary:
This invention concerns an air device in a interior ventilation system for automotive vehicle that consists of a box with a central ventilation outlet and for which at least two lateral ventilation openings are planed and that should include an adequate and constant air output in the laterals, regardless of the position of the panel, that is, feet, feet + windshield and windshield; one distribution chamber in which a distribution flap is placed to control the air flow that moves toward the central ventilation outlet and the lateral ventilation openings and the two previously mentioned lateral ventilation openings are subdivided in at least two sections, one fed and controlled by the distribution flap and the second fed by the air coming from a permanent auxiliary duct of continuous air flow, independent from the position of the distribution flaps and without output to the central ventilation outlet. This auxiliary duct collects air from the "ventilation duct" or "windshield duct" or simultaneously from the "ventilation and windshield duct", depending on the position of the distribution flaps and leads it directly to the lateral ventilation outlets. It is important to point out that, in the ventilation position, the geometry of the dedicated ducts does not allow the air to cross over to the side of the outlet directed towards the windshield and the same occurs in the windshield position, in which the geometry of the duct does not allow the air to cross over to the feet duct.

According to the invention, two auxiliary ducts may be placed in a distribution box that has two lateral ventilation outlets. However, the number of ducts that may be allocated depends on the geometry of the distribution box and on the number of outlets for which it is intended to obtain a permanent air flow.

In the case of two auxiliary ducts for two lateral ventilation outlets, each of these ducts is located in one half of the box, and these two halves united form the air distribution box.

Still according to the invention, the outlets of the auxiliary ducts are placed past the distribution flaps in relation to the circulation of air flow inside the air device.

The flaps may be of the rotating type, in butterfly shape, in which there is a central axis with two lateral wings, or of the flag type in which the axis is located in one extremity of the distribution flap blade.

Still according to the invention, one of the intakes is formed by a second air duct located in the air conditioning device that is not the "ventilation duct", such as the "windshield duct" or another that exists in the air conditioning device.

It is possible to maintain a permanent output in the lateral ventilation outlets and an air sealing in the central ventilation outlet when the ventilation flap is in "closed position", using only two flaps.

It should be noted that the number of auxiliary ducts may vary as necessary.

The inclusion of the auxiliary duct allows to also obtain a continuous output in other positions that may be wanted, such as, windshield, central ventilation, feet, back seat passenger or other outlets that may exist in air conditioning devices.

The invention may be explained in greater detail through practical examples:
Figure 1 is a frontal isometric view of an air conditioning distribution box for automotive use incorporating the auxiliary duct as per the invention. This figure depicts all the air conditioning outlets of automotive use.
Figure 2 is an isometric view of an air conditioning distribution box for automotive use incorporating the auxiliary duct as per the invention. This figure depicts the two air intakes of the auxiliary duct in the distribution block of the air conditioning box for automotive use.
Figure 3 is a view of the air conditioning distribution box for automotive use incorporating the auxiliary duct according to the invention, depicting a first situation of air flow path (windshield distribution mode). It is noted that the air does not tend to move towards the longer or more complex path. Therefore, there is no output in the feet outlet.
Figure 3a is a simplified isometric view illustrating the result of the windshield distribution mode of figure 3.
Figure 4 is a view of the air conditioning distribution box for automotive use that incorporates the auxiliary duct according to the invention, depicting a second situation of the air flow path (windshield + feet distribution mode).
Figure 4a is a simplified isometric view depicting the result of the windshield + feet distribution mode in figure 4.
Figure 5 is a view of the air conditioning distribution box for automotive use that incorporates the auxiliary duct according to the invention, depicting a third situation of air flow path (feet distribution mode).
Figure 5a is a simplified isometric view depicting the result of the feet distribution mode in figure 5.
Figure 6 is a view of the air conditioning distribution box for automotive use incorporating the auxiliary duct according to the invention, depicting a fourth situation of air flow path (feet + ventilation distribution mode). It is noted that the air does not tend to move towards the longer or more complex path. Therefore, there is no output in the windshield outlet.
Figure 6a is a simplified isometric view depicting the result of the feet distribution mode of figure 6.
Figure 7 is a view of the air conditioning distribution box for automotive use that incorporates the auxiliary duct according to the invention, depicting a fifth situation of air flow path (ventilation distribution mode). Once more, it is noted that the air does not tend to move towards the longer or more complex path. Therefore, there is no output in the windshield outlet.
Figure 7a is a simplified isometric view that depicts the result of the feet distribution mode in figure 7.

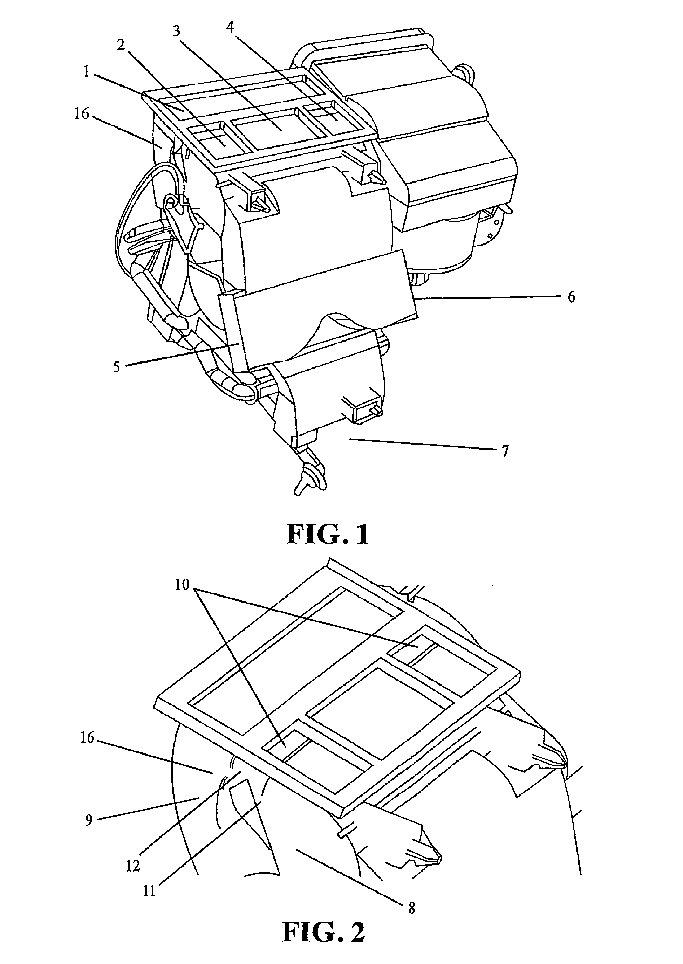

In figure 1 is depicted a vehicular air conditioning device, showing the air outlets in separate with one air defrosting outlet 1 directed towards the windshield, one left lateral ventilation outlet 2, one central ventilation outlet 3, one right lateral ventilation outlet 4, one outlet 5 for the driver's feet, one outlet 6 for the front seat passenger's feet and one outlet 7 for the passengers in the back seat of the vehicle. The device includes a distribution box with auxiliary duct for permanent air output which may be adjusted to respond to the demands of the design, using or not a deflective wall 16.

Figure 2 depicts a view of the distribution box of an air conditioning device, showing the auxiliary duct with the two air intakes: one 11 that collects air from the "ventilation duct" 8 and the second intake 12 that collects air from the windshield duct 9. Both intakes 11 and 12 lead a continuous air output towards the left and right lateral ventilation outlets 2 and 4 and through the auxiliary duct outlet 10. In the case depicted there are 2 auxiliary ducts in the two lateral sections of the box, but this number may vary according to the geometry of the outlets using the same collection principle.

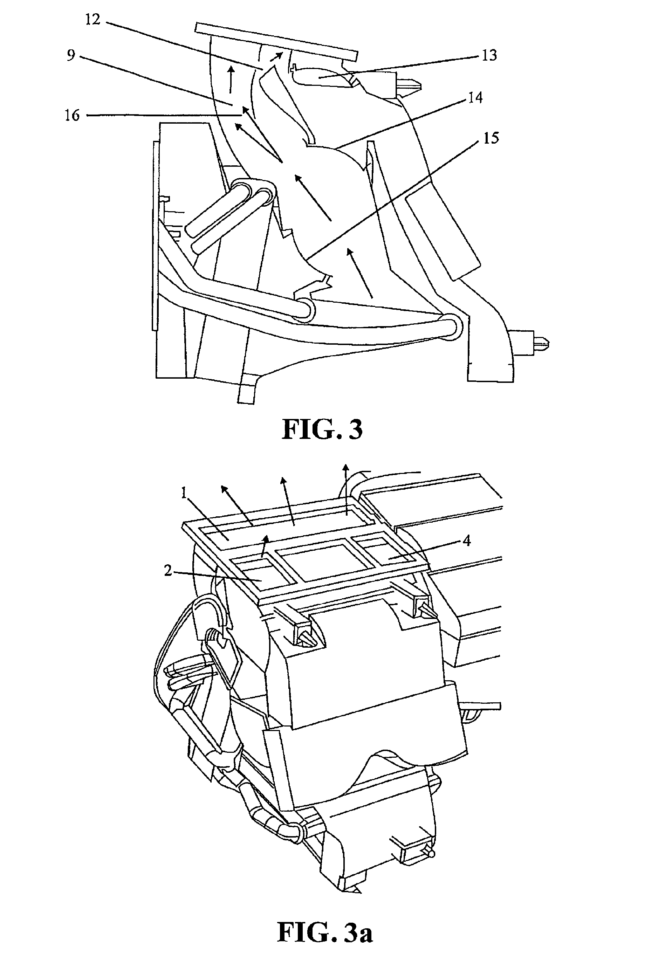

Figure 3 depicts the windshield distribution mode in which the ventilation and feet flap 13 is set to the "closed" ventilation position. The windshield flap 14 is set to the "windshield" position. This positioning of the flaps 13 and 14 enables the result shown in figure 3a, in which the air is guided in the windshield outlet 1 through the "windshield duct" 9. There is also an air output in the lateral ventilation outlets 2 and 4. This output in the lateral ventilation outlets 2 and 4 is possible as a result of the auxiliary duct described in the invention, in which, in this case, the air is collected through the intake 12, through the "windshield duct" 9 and let out in the outlets 10 of the auxiliary ducts, allowing air to the two lateral ventilation outlets 2 and 4. This figure 3 also depicts the mixing flap 15 that is set to "all heat" position. However, it may be set from "all heat" position to "all cold" position without affecting the logic of the distribution modes. The intake geometries 12 and 11 were defined by CFD simulation so that there is no direct passage of air from duct 12 to duct 11 and, as a result, no unwanted air residue in the feet outlet is caused.

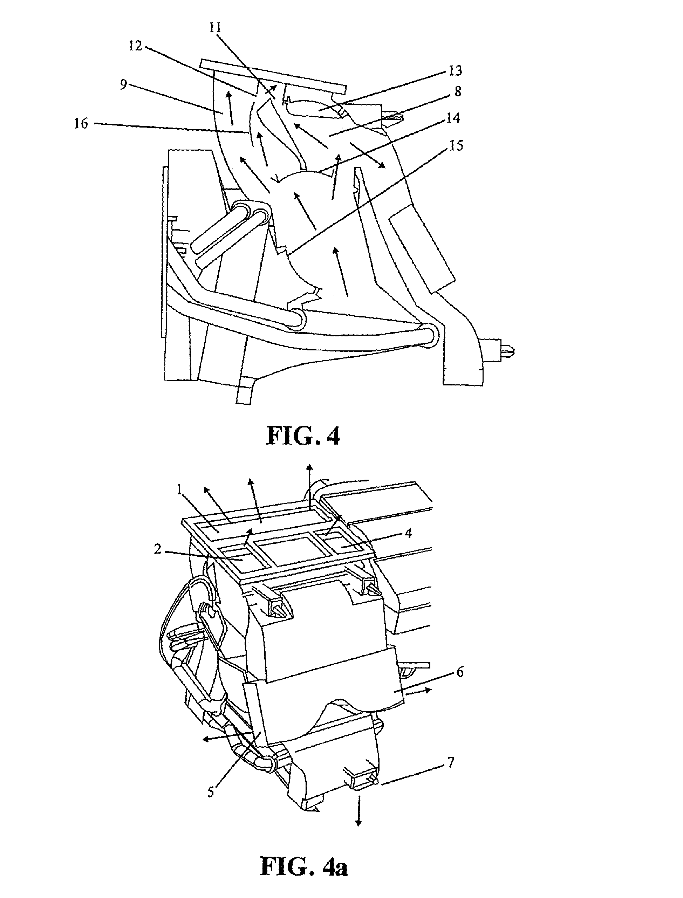

Figure 4 depicts the windshield + feet distribution mode in which the feet ventilation flap 13 is set to the "closed" ventilation position. The windshield flap 14 is set to the intermediate position between windshield and ventilation. This positioning of the 13 and 14 flaps enables the result depicted in figure 4a, in which the air is directed to the windshield outlet 1 through the "windshield duct" 9, to the feet outlets 5 and 6 and to the back seat passengers 7 and in which there is also an air output in the lateral ventilation outlets 2 and 4. This output in the lateral ventilation outlets 2 and 4 is possible due to the auxiliary duct described in the invention, in which, in this case, the air is collected through the two intakes: intake 12, through the "windshield duct" 9 and intake 11, through the "ventilation duct" 8. This previously collected air is later let out through the outlets 10 of the auxiliary ducts, which enables air in the two ventilation lateral outlets 2 and 4. This figure 4 also depicts the mixing flap 15 that is set to the "all heat" position; however, it may be set from "all heat" position to "all cold" position without affecting the logic of the distribution modes.

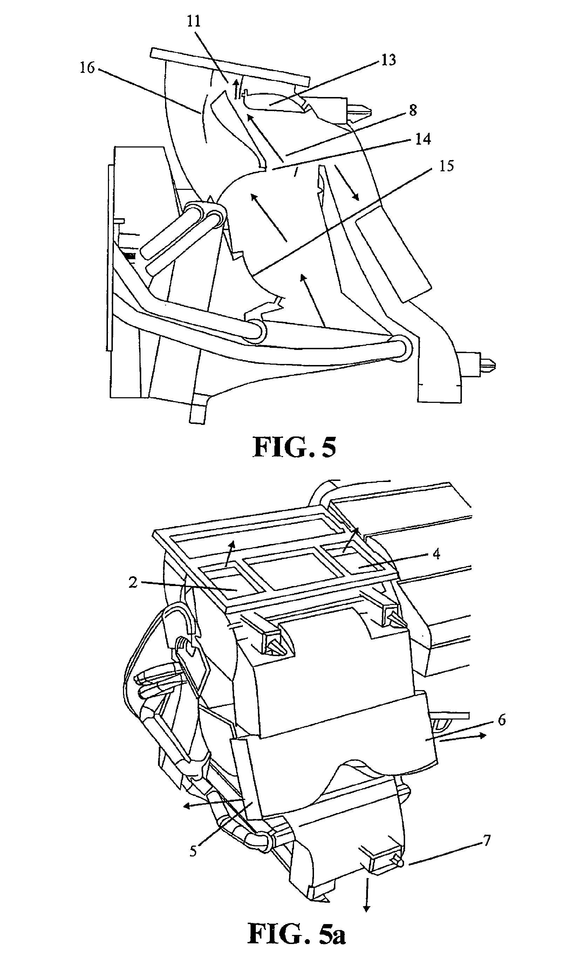

Figure 5 depicts the "feet" distribution mode in which the feet ventilation flap 13 is set to the "closed" ventilation position. The windshield flap 14 is set to the "closed" windshield position. This positioning of the 13 and 14 flaps enables the result shown in figure 5a, in which the air is directed to the feet outlets 5 and 6 and to the back seat passengers 7 and in which there is also an air output in the 2 and 4 lateral ventilation outlets. This output in the lateral ventilation outlets 2 and 4 is possible as a result of the auxiliary duct described in the invention, in which case the air is collected through the intake 11, through the "ventilation duct" 8. This air previously collected is let out in the outputs 10 of the auxiliary ducts which enables air in the two lateral ventilation outlets 2 and 4. This figure 5 also depicts the mixing flap 15 that is set to the "all heat" position. However, it may be set from the "all heat" position to the "all cold" position without affecting the logic of the distribution modes. It is noted, once more, that the air does not tend to cross over directly from intake 11 to 12 as a result of the geometry defined by means of the CFD simulation.

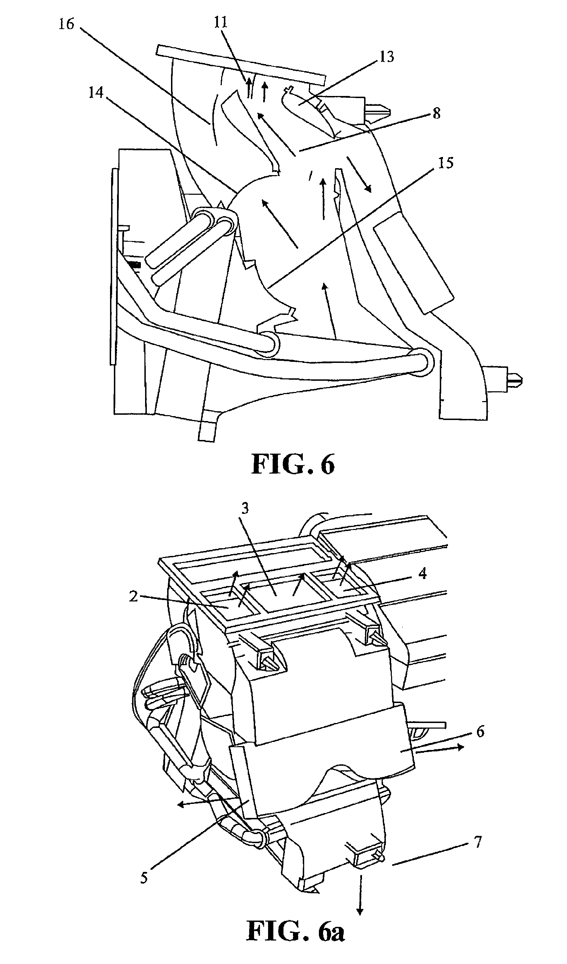

Figure 6 demonstrates the feet + ventilation distribution mode in which the feet ventilation flap 13 is set to the intermediate ventilation position, between ventilation and feet. The windshield flap 14 is set to the "closed" windshield position. This positioning of the 13 and 14 flaps enables the result shown in figure 6a, in which the air is guided to the feet outlets 5 and 6, to the back seat passengers 7 and to the 2, 3 and 4 ventilation outlets and in which there is also an additional air output in the 2 and 4 lateral ventilation outlets. This additional output in the lateral ventilation outlets 2 and 4 is possible as a result of the auxiliary duct described in the invention, in which, in this case, the air is collected through the intake 11, through the "ventilation duct" 8. This air previously collected is let out in the outlets 10 of the auxiliary ducts which enables an additional amount of air in the two lateral ventilation outlets 2 and 4. This figure 6 also depicts the mixing flap 15 that is set to the "all heat" position. However, it may be set from the "all heat" position to the "all cold" position without affecting the logic of the distribution modes.

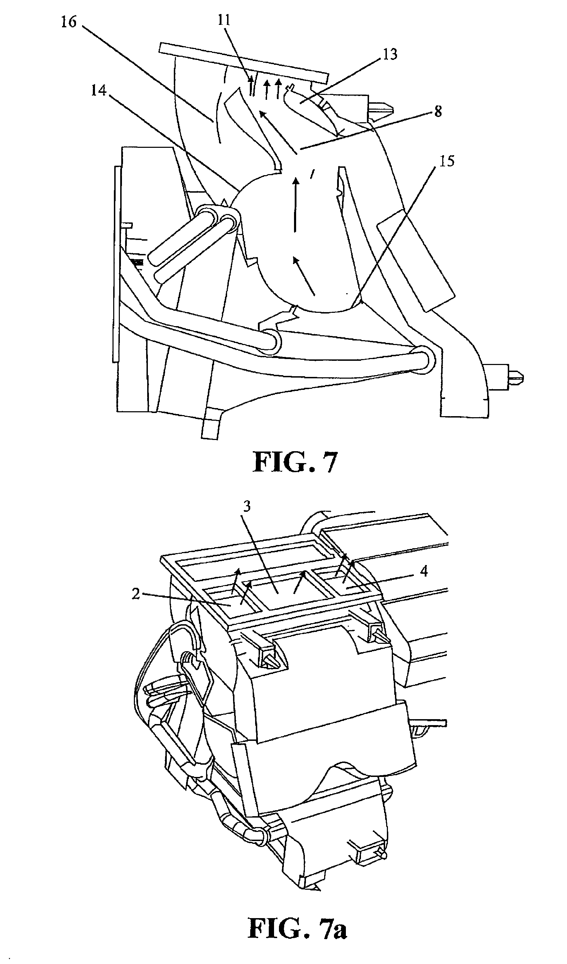

Figure 7 depicts the "ventilation" distribution mode in which the feet ventilation flap 13 is set to the "open" ventilation position. The windshield flap 14 is set to the "closed" windshield position. This positioning of the 13 and 14 flaps enables the result shown in figure 7a, in which the air is directed to the 2, 3 and 4 ventilation outlets and in which there is also an additional air output in the 2 and 4 lateral ventilation outlets. This additional output in the lateral ventilation outlets 2 and 4 is possible as a result of the auxiliary duct described in the invention, in which, in this case, the air is collected through the intake 11, through the "ventilation duct" 8. This air previously collected is let out through the outlets 10 of the auxiliary ducts, which enables an amount of additional air in the two lateral ventilation outlets 2 and 4. Figure 7 also depicts the mixing flap 15 that is set to the "all cold" position. However, it may be set from the "all heat" position to the "all cold" position without affecting the logic of the distribution modes.

For the central ventilation outlet: The goal is to have no air output or an air output as close to 0 as possible for the windshield, feet + windshield and feet distribution modes. For the feet + ventilation and ventilation distribution modes the goal is to obtain an output that is in conformity with the demand of each application.

For the lateral ventilation outlets the goal is to obtain a constant output for all distribution modes. This output may vary depending on the need.

All modes and results reached with the configuration proposed in this invention have been tested and approved by means of CFD simulations, i.e., computational fluid dynamics.

## Claims

1. Ventilation, heating and/or air conditioning device for automotive vehicle interior that comprises a box in which an air flow circulates and that includes, at least, one air inlet, one defrosting outlet (1), ventilation outlets (2,3,4), one feet outlet (5) for the driver's feet and one distribution chamber, in which:
- a ventilation duct (8) feeds an air flow to the ventilation outlets (2,3,4) and to the feet outlet (5),
- a windshield duct (9) feeds an air flow to the defrosting outlets (1),
- a first flap (13) is set to control the air flow directed to the ventilation outlets (2,3,4) and to the driver's feet outlet (5),
- a second flap (14) is set to control the air flow directed to the ventilation duct (8), to the windshield duct (9) and to the ventilation outlets (2,3,4) that include one central ventilation outlet (3) and two lateral ventilation outlets (2,4), wherein
the lateral ventilation outlets (2,4) are subdivided in, at least, a first section and a second section (10), by at least one auxiliary duct, the first flap (13) controlling the air flow directed to the central ventilation outlet (3) and the first section of the lateral ventilation outlets (2,4) **characterised in that** each second section (10) is fed by air from two air intakes (11,12): one air intake (11) originating from the ventilation duct (8) and another air intake (12) originating from the windshield duct (9).

2. Device according to claim 1, **characterised in that** the ventilation outlets, the defrosting outlet and the driver's feet outlet are controlled by only two flaps.

3. Device according to claim 1, **characterised in that** the second part of the lateral ventilation outlets is formed by a wall that is parallel to the wall that separates the ventilation duct (8) from the windshield duct (9).

4. Device according to claim 1, **characterised in that** the collection (12) results from the windshield duct (9) located in the device.

5. Device according to claim 1 or 4, **characterised in that**, in the case of two auxiliary ducts for two lateral ventilation outlets, each of these ducts is located in one half of the box that, united to the other half, forms the air distribution box.

6. Device according to claim 4, **characterised in that** the outlets of the auxiliary ducts are located below the distribution flaps in relation to the air flow circulation inside the air device.

7. Device according to claim 1, **characterised in that** there is a permanent output in the lateral ventilation outlets (2 and 4) and air sealing in the central ventilation outlet (3) when the ventilation flap (13) is set to the "closed" ventilation position, using only two flaps (13 and 14).

8. Device according to claim 1, **characterised in that** the number of auxiliary ducts may vary as needed.

9. Device according to claim 1, **characterised in that** the inclusion of the auxiliary duct allows for a continuous output also in other positions that may be desired, such as windshield (1), central ventilation output (3), feet (5 and 6), back seat passenger (7) or other outputs that may exist in the air device.

## Patentansprüche

1. Lüftungs-, Heizungs- und/oder Luftklimatisierungsvorrichtung für den Innenraum eines Kraftfahrzeugs, die einen Kasten umfasst, in dem ein Luftstrom zirkuliert, und die mindestens einen Lufteinlass, einen Enteisungsauslass (1), Lüftungsauslässe (2, 3, 4), einen Fußauslass (5) für die Füße des Fahrers und eine Verteilerkammer umfasst, wobei:
- ein Lüftungskanal (8) den Lüftungsauslässen (2, 3, 4) und dem Fußauslass (5) einen Luftstrom zuführt,
- ein Windschutzscheibenkanal (9) den Enteisungsauslässen (1) einen Luftstrom zuführt,
- eine erste Klappe (13) so eingestellt ist, dass sie den auf die Lüftungsauslässe (2, 3, 4) und den Fahrerfußauslass (5) gerichteten Luftstrom steuert,
- eine zweite Klappe (14) so eingestellt ist, dass sie den zu dem Lüftungskanal (8), dem Windschutzscheibenkanal (9) und den Lüftungsauslässen (2, 3, 4), die einen mittleren Lüftungsauslass (3) und zwei seitliche Lüftungsauslässe (2, 4) enthalten, gerichteten Luftstrom steuert, wobei
die seitlichen Lüftungsauslässe (2, 4) durch mindestens einen Zusatzkanal in mindestens einen ersten Abschnitt und einen zweiten Abschnitt (10) unterteilt sind, wobei die erste Klappe (13) den zu dem mittleren Lüftungsauslass (3) und dem ersten Abschnitt der seitlichen Lüftungsauslässe (2, 4) gerichteten Luftstrom steuert, **dadurch gekennzeichnet, dass** jeder zweite Abschnitt (10) durch Luft von zwei Lufteinlässen (11, 12) - einem Lufteinlass (11), der von dem Lüftungskanal (8) ausgeht, und einem anderen Lufteinlass (12), der von dem Windschutzscheibenkanal (9) ausgeht - gespeist wird.

2. Vorrichtung nach Anspruch 1, **dadurch gekennzeichnet, dass** die Lüftungsauslässe, der Enteisungsauslass und der Fahrerfußauslass durch nur zwei Klappen gesteuert werden.

3. Vorrichtung nach Anspruch 1, **dadurch gekennzeichnet, dass** der zweite Teil der seitlichen Lüftungsauslässe durch eine Wand gebildet wird, die sich parallel zu der Wand erstreckt, die den Lüftungskanal (8) von dem Windschutzscheibenkanal (9) trennt.

4. Vorrichtung nach Anspruch 1, **dadurch gekennzeichnet, dass** die Sammlung (12) aus dem in der Vorrichtung positionierten Windschutzscheibenkanal (9) erfolgt.

5. Vorrichtung nach Anspruch 1 oder 4, **dadurch gekennzeichnet, dass** im Falle von zwei Zusatzkanälen für zwei seitliche Lüftungsauslässe, jeder dieser Kanäle in einer Hälfte des Kastens positioniert ist und in Verbindung mit der anderen Hälfte den Luftverteilerkasten bildet.

6. Vorrichtung nach Anspruch 4, **dadurch gekennzeichnet, dass** die Auslässe der Zusatzkanäle unter den Verteilerklappen bezüglich der Luftstromzirkulation in der Luftvorrichtung positioniert sind.

7. Vorrichtung nach Anspruch 1, **dadurch gekennzeichnet, dass** eine Dauerabgabe in den seitlichen Lüftungsauslässen (2 und 4) und Luftabdichtung in dem mittleren Lüftungsauslass (3) vorliegt, wenn die Lüftungsklappe (13) in die "geschlossene" Lüftungsstellung gestellt ist, wobei nur zwei Klappen (13 und 14) verwendet werden.

8. Vorrichtung nach Anspruch 1, **dadurch gekennzeichnet, dass** die mehreren Zusatzkanäle nach Bedarf variieren können.

9. Vorrichtung nach Anspruch 1, **dadurch gekennzeichnet, dass** der Einschluss des Zusatzkanals eine kontinuierliche Ausgabe auch in anderen, erwünschten Stellungen, wie zum Beispiel die Windschutzscheibe (1), den mittleren Lüftungsausgang (3), die Füße (5 und 6), den Rücksitzinsassen (7) oder andere Ausgaben, die in der Luftvorrichtung vorhanden sein können, gestattet.

## Revendications

1. Dispositif de ventilation, chauffage et/ou climatisation pour l'intérieur d'un véhicule automobile, qui comprend une boîte dans laquelle circule un flux d'air et qui comporte, au moins, une entrée d'air, une sortie de dégivrage (1), des sorties de ventilation (2, 3, 4), une sortie au niveau des pieds (5) pour les pieds du conducteur et une chambre de distribution, dans lequel :
- un conduit de ventilation (8) achemine un flux d'air aux sorties de ventilation (2, 3, 4) et à la sortie au niveau des pieds (5),
- un conduit de pare-brise (9) achemine un flux d'air aux sorties de dégivrage (1),
- un premier volet (13) est réglé pour réguler le flux d'air orienté vers les sorties de ventilation (2, 3, 4) et vers la sortie au niveau des pieds (5) du conducteur,
- un deuxième volet (14) est réglé pour réguler le flux d'air orienté vers le conduit de ventilation (8), vers le conduit de pare-brise (9) et vers les sorties de ventilation (2, 3, 4) qui incluent une sortie de ventilation centrale (3) et deux sorties de ventilation latérales (2, 4),
les sorties de ventilation latérales (2, 4) étant subdivisées en au moins une première section et une deuxième section (10), par au moins un conduit auxiliaire, le premier volet (13) régulant le flux d'air orienté ers la sortie de ventilation centrale (3) et la première section des sorties de ventilation latérales (2, 4),
**caractérisé en ce que** chaque deuxième section (10) est alimentée en air provenant de deux admissions d'air (11, 12) ; une admission d'air (11) provenant du conduit de ventilation (8) et une autre admission d'air (12) provenant du conduit de pare-brise (9).

2. Dispositif selon la revendication 1, **caractérisé en ce que** les sorties de ventilation, la sortie de dégivrage et la sortie au niveau des pieds sont régulées par seulement deux volets.

3. Dispositif selon la revendication 1, **caractérisé en ce que** la deuxième partie des sorties de ventilation latérales est formée par une paroi qui est parallèle à la paroi qui sépare le conduit de ventilation (8) du conduit de pare-brise (9).

4. Dispositif selon la revendication 1, **caractérisé en ce que** la collecte (12) résulte du conduit de pare-brise (9) situé dans le dispositif.

5. Dispositif selon la revendication 1 ou 4, **caractérisé en ce que** dans le cas de deux conduits auxiliaires pour deux sorties de ventilation latérales, chacun de ces conduits est situé dans une moitié de la boite, qui, réunie à l'autre moitié, forme la boîte de distribution d'air.

6. Dispositif selon la revendication 4, **caractérisé en ce que** les sorties des conduits auxiliaires sont situées en dessous des volets de distribution par rapport à la circulation du flux d'air à l'intérieur du dispositif d'air.

7. Dispositif selon la revendication 1, **caractérisé en ce qu'**il y a une sortie permanente dans les sorties de ventilation latérales (2 et 4) et une étanchéité à l'air dans la sortie de ventilation centrale (3) lorsque le volet de ventilation (13) est réglé dans la position de ventilation "fermée", en utilisant seulement deux volets (13 et 14).

8. Dispositif selon la revendication 1, **caractérisé en ce que** le nombre des conduits auxiliaires peut varier selon les besoins.

9. Dispositif selon la revendication 1, **caractérisé en ce que** le fait d'intégrer le conduit auxiliaire permet une sortie en continu également dans d'autres positions qui peuvent être souhaitables, comme des sorties au niveau du pare-brise (1), de la ventilation centrale (3), des pieds (5 et 6), du siège pour passagers arrière (7) ou d'autres sorties qui peuvent exister dans le dispositif d'air.
